# EUROPEAN PATENT SPECIFICATION

(11) **EP 3 636 434 B1**
(45) Date of publication and mention of the grant of the patent: **19.08.2026**
(21) Application number: 19202212.7
(22) Date of filing: 09.10.2019
(51) Int. Cl.: B32B 27/36, B32B 7/12, B32B 27/08, B32B 27/16, B32B 27/18, B32B 27/30, B32B 27/32, C08L 67/02, C08L 67/04

(54) **THIN FILM FOR WASTE PACKING**
DÜNNFILM FÜR ABFALLVERPACKUNG
FILM MINCE POUR CONDITIONNEMENT DE DÉCHETS

(30) Priority: 09.10.2018 EP 18199373
(43) Date of publication of application: 15.04.2020
(73) Proprietor: Flexopack S.A., 194 00 Koropi (GR)
(72) Inventor: GINOSATIS, Dimitris, 19400 Koropi Attica (GR)
(74) Representative: Isarpatent

(56) References cited:
- EP-A2- 2 261 022
- WO-A1-2018/197676
- US-A1- 2011 244 185
- US-A1- 2018 281 359

## Description

The present invention refers to a polymeric film comprising odor barrier material for packing malodorous waste. The film comprises at least 95% biodegradable materials.

A lot of waste products produce smells that are annoying to the environment. Examples are decayed food, kid nappies and cat litter.

In the prior art there are many films that could be used for protection from malodors. As well known in the art, the use of materials like EVOH, PVDC, and polyacrylonitrile are recommended in order to not allow malodors escape from a container (e.g. a bag or other configuration) and to provide an unpleasant atmosphere.

US2011/244185A1 relates to a biaxially oriented polylactic acid film which can be used for packaging applications
US2018/281359A1 relates to biodegradable sheets comprising at least two different polymer layers.

EP2261022A2 discloses a multilayer degradable film suitable for malodorous item comprising an outer and inner layers comprising biodegradable polymers and an oxygen barrier layer located in between.

There are also a lot of known configurations of packing a certain length of film (e.g. 20 meters) in a compressed form (e.g. in a cassette). Examples of the representative cassettes are shown in US 4,934,529 or US 3,356,192.

Generally the cassette comprises a tubular core, casing wall and cassette bottom. The film is pulled through the area between the lid of the cassette and the casing wall. The flexible tubing is dispensed from the cassette. After the malodorous item is thrown into the bag the core is rotated and the flexible tube is twisted so that it closes as hermetically as possible the waste/environment area.

To dispose the next diaper the user pushes the next portion of film. The previous hermetically closed diaper is pushed downwards and the new diaper is packed in a new configuration. All these different packs are stored in a bin which is periodically emptied.

Separation of one pack to the other can be done by various means. A rotary knife is preferred.

### FILM CHARACTERISTICS

In the prior art a lot of different film configurations either monolayer or multilayer have been proposed. The basic characteristics a film should have in order to be used in the particular case are
1. Barrier to odours
2. To have the proper deadfold properties (non-resilient) so that is compressed efficiently in the cassette.
3. To have sufficient mechanical properties (e.g. tensile strength at break, elongation).

EP 2 332 723 provides a solution to the problem. Still there is need to develop a biodegradable film that could be equivalent in performance to the films described in EP 2 332 723.

Generally, many films have been proposed to cover the requirements of biodegradability and oxygen barrier. For example patent US 2014/0308534 teaches a multilayer film including an outer and inner layer of PLA. Such a film is very stiff and brittle due to PLA and would need special impact modifiers not easy to incorporate.

### SUMMARY OF THE INVENTION

The invention is directed to a multilayer film for malodorous item packaging, where the film comprises a layer comprising a blend of polybutylene adipate terephthalate (PBAT) and polylactic acid (PLA) and a barrier layer comprising an oxygen barrier material, wherein the film comprises at least 95% biodegradable material, wherein the film has a thickness from 10 to 50 microns, wherein the barrier layer comprises amorphous PVA polymer, and wherein the film comprises an inner layer and an outer layer each of them comprising the blend of polybutylene adipate terephthalate (PBAT) and polylactic acid (PLA).

Preferred embodiments of the multilayer film are set out in dependent claims 2 to 5.

The invention is further directed to the use of the film of the present invention for packaging malodourous items.

In a further aspect the invention is directed to a method for producing a film according to the present invention, wherein the method is a hot blown film method or the film is produced by extrusion through a flat cast die.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured in water according to ASTM 2732. For temperatures like 100°C or more, glycerine is used as a reference liquid.

The term "total heat shrinkability" refers to the sum of heat shrinkability at the MD direction and heat shrinkability at the TD direction. In all cases, ASTM 2732 is used for measurement of shrinkabilities.

The term "multilayer" refers to a film comprising 2 or more layers.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air. Hence, the term "inner layer" is to be regarded as an additional outer layer of the multilayer film, which is in direct contact with the item to be packaged (i.e. an outer layer of the film which is located on the inside after a packaging process, not exposed to the environment).

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non olefinic comonomer (such as ester) etc. Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalyzed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase"ethylene methacrylate copolymers" refers to copolymers of ethylene and methacrylate monomer. The monomer content is less than 40%.

As used herein the phrase "ethylene vinyl acetate copolymer" or EVA refer to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials, are EVOH, PVDC or polyamide.

As used herein, the term EVOH refers to saponified products of ethylene vinyl ester copolymers. The ethylene content is typically in the range of 25 to 50% per mol. All the later references to EVOH ethylene content will be in % per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn from Dupont.

As used herein, the term "polypropylene" refers to polymers incorporating propylene structural units. Examples of these, are homo polypropylenes, random copolymers of propylene and ethylene, block copolymers of propylene and ethylene, copolymers or blends of propylene and rubber(such as blends of polypropylene and ethylene propylene rubber), propylene ethylene alpha olefin terpolymers and others.These polymers may be isotactic, syndiotactic or atactic. Isotactic is preferred.

As used herein the term "substantially non resilient material" refers to materials or material compounds comprising at least 40% per weight inorganics like calcium carbonate, titanium dioxide, wollastonite, mica, glass fibers, dolomite and the like. The materials or material compounds can further comprise polyethylene, polypropylene, styrene polymer or other thermoplastic material.

As used herein the term "polubutylene adipate terephthalate" or PBAT refers to a copolymer of adipic acid, terephthalic acid and 1,4 butanediol.

As used herein the term "substantially amorphous PVA" refers to a class of polymers as described in US 8,026,302 by Nippon Gohsei. Polymers of this category are for example sold under the tradename G Polymer.

As used herein, the term "polylactic acid" or PLA refers to any polymer of lactic acid and/or lactide.

As used herein, the term "polybutylene succinate" refers to homopolymer or copolymer of succinic acid and butanediol. The monomers used can be produced by synthetic means or biobased means. Copolymers such as polybutylene succinate adipate (PBSA), polybutylene succinate terephthalate and others are inside the scope of the term as used herein.

As used herein the term "biodegradable material" refers to a degradable polymer wherein the primary degradation mechanism is through the action of metabolism by microorganisms.

All measurement methods mentioned herein are readily available for the skilled person. For example, they can be obtained from the American National Standards Institute at: www.webstore.ansi.org

All percentages are based on weight per weight ratio, except when otherwise stated.

### DETAILED DESCRIPTION OF THE INVENTION

According to a first aspect the present invention is directed to a multilayer film for malodorous item packaging, wherein the film comprises
a layer comprising a blend of polybutylene adipate terephthalate (PBAT) and polylactic acid (PLA) and
a barrier layer comprising an oxygen barrier material,
wherein the film comprises at least 95% biodegradable material and wherein the film has a thickness from 10 to 50 microns,
wherein the barrier layer comprises amorphous PVA polymer, and
wherein the film comprises an inner layer and an outer layer each of them comprising the blend of polybutylene adipate terephthalate (PBAT) and polylactic acid (PLA).

According to a preferred embodiment the film has a weight of between 15g/m² and 45 g/m².

In a further preferred embodiment the PLA content in a layer comprising a blend of polybutylene adipate terephthalate (PBAT) and polylactic acid (PLA) is less than 50% per weight.

In a further preferred embodiment, the film comprises the construction:
OUTERLAYER/ABUSELAYER/INTERMEDIATELAYER/BARRIER LAYER/INTERMEDIATE LAYER/ABUSE LAYER/INNER LAYER

In another preferred embodiment, the film comprises the construction
OUTERLAYER/INTERMEDIATELAYER/BARRIERLAYER/INTERMEDIATE LAYER/INNER LAYER

### Detailed description of the layers

### Barrier layer

In a preferred version of the invention, the oxygen barrier material is substantially amorphous PVA polymer.

The substantially amorphous PVA polymer is described e.g. in US 8,026,302 by Nippon Gohsei. This material can be used by itself or in a blend with a minor content of other materials in order to assist in maintaining the oxygen barrier properties at high humidity levels. Amorphous polyamide is preferred in a percentage not exceeding 10%, preferable not exceeding 5% per weight.

The oxygen barrier material preferably has a weight of less than 10 g/m², more preferably less than 5 g/m² and even more preferably less than 3 g/m².

### Outer layer.

The outer layer comprises a blend of polybutylene adipate terephthalate (PBAT) and polylactic acid (PLA).

In a further preferred version, the weight of the outer layer is less than 15 g/m², more preferably less than 10 g/m².

In a further preferred version, the layer may also comprise other polymers such as polybutylene succinate (PBS), polybutylene succinate adipate (PBSA) and/or polycaprolactone (PCL).

In a further preferred embodiment the PLA content in the layer is less than 70%, preferable less than 50%, more preferably less than 40%.

In a further preferred version the layer comprises additives like slip agents, antiblock agents, antioxidants and/or moisture absorbers and/or adsorbers.

### Inner layer

The inner layer comprises a blend of polybutylene adipate terephthalate (PBAT) and polylactic acid (PLA).

In a further preferred version, the thickness of the outer layer is less than 25 microns, more preferably less than 15 microns.

In a further preferred version, the layer may also comprise other polymers such as polybutylene succinate (PBS), polybutylene succinate adipate (PBSA) and/or polycaprolactone(PCL).

In a further preferred embodiment the PLA content in the inner layer is less than 70%, preferable less than 50%, more preferably less than 40%.

Ina further preferred version the layer comprises additives like slip agents, antiblock agents, antioxidants and/or moisture absorbers and/or adsorbers.

### Intermediate layers

In the intermediate layers, typical adhesive resins like maleic anhydrite modified polymers may be used. Typical examples are polymers as described in US 2014/0308534.

### Additives

Additives well known in the art may be used in one or more layers of the present invention. Slip additives, antiblock additives, antifog, polymer processing aids may be used if pertinent. In order to increase the mechanical properties the film may be crosslinked with one of the following methods.

### Crosslinking

Preferably the film is crosslinked. The film can be crosslinked by any known method suitable to crosslink polymer films according to the present invention. Preferably the crosslinking is obtained by e-beam radiation, gamma radiation, moisture crosslinking using silane grafting compounds, or peroxide crosslinking.

### Production of the film

The preferred production method for the film is the hot blown film method, which is well known in the art. Other methods like extrusion through flat cast die are also possible.

The film may be in tubular form or sealed at the edges or single sheet configuration. Centrefold configuration is also possible.

### POTENTIAL USES OF THE FILM AS PER THE INVENTION

Except the use of the film in storing waste with the help of a cassette as described above, the film can be used in pouch, bag, tubular or other configuration for uses such as
*retail bags
*garbage bags
*hygiene bags
and other similar applications.

### EXAMPLES

### EXAMPLE 1

A 5 layer film is produced in a commercial hot blown film line with the following recipe (all percentages are percentages by weight)

| | |
|---|---|
| Inner layer | 80% ECOVIO F2331 + 10% PBAT based antiblock + 10% PBAT based slip, 13 microns |
| Adjacent layer | 100% ADH 1, 4 microns |
| Barrier layer | 100% G POLYMER OKS 8074, 4 microns |
| Adjacent layer | 100% ADH1, 4 microns |
| Outer layer | 90% ECOVIO F2331+ 5% PBAT based antiblock + 5% PBAT based slip, 7 microns |

ADH1 is a maleic anhydride modified aliphatic polyester copolymer.

G POLYMER OKS 8074 is an amorphous PVA polymer.

Ecovio F2331 is a ready-made compound comprising PBAT and PLA. The PLA content in the layer is less than 30% by weight.

### EXAMPLE 2

A 5 layer film is produced in a commercial hot blown film line with the following recipe (all percentages are percentages by weight)

| | |
|---|---|
| Inner layer | 80% ECOVIO F2331 + 10% PBAT based antiblock + 10% PBAT based slip, 13 microns |
| Adjacent layer | 100% ADH 1, 4 microns |
| Barrier layer | 100% G POLYMER OKS 8074, 3 microns |
| Adjacent layer | 100% ADH1, 4 microns |
| Outer layer | 90% ECOVIO F2223 + 5% PBAT based antiblock + 5% PBAT based slip, 7 microns |

Ecovio F2331 is a ready-made compound comprising PBAT and PLA. The PLA in both the inner and the outer layer is less than 30%.

### COMPARATIVE EXAMPLE

A 5 layer film is produced in a hot blown film commercial line with the following recipe (all percentages are percentages by weight)

| | |
|---|---|
| Inner layer | 80% EAO1+ 15% SNR1+ 5% ADDITIVES, 7 microns |
| Adjacent layer | 100% ADH 1, 2.5 microns |
| Barrier layer | 100% EVOH 1, 2 microns |
| Adjacent layer | 100% ADH1, 2.5 microns |
| Outer layer | 100% PP, 2, 5 microns |

EAO1 is ethylene octene copolymer, Dowlex 5056G, density 0.919.

SNR1 is an inorganic additive compound
EVOH 1 is an ethylene vinyl alcohol as defined herein,TESTS
1. Odor testing.
2. Cassette compression test is explained below.

### CASSETTE COMPRESSION TEST

The test is performed as described in the following:
A commercial litter cassette is emptied and then filled with 20 meters of film of each example, all slitted at the same width. Then the "spring back effect" of each film is monitored in order to judge if the film could work in a cassette filling operation. Then a lid is put and the operator tries to remove the film from the cassette simulating the real procedure done by the people using this system.

According to the test, the films of the examples 1 and 2 had a good "spring back" effect. During the second part of the test they were removed by the cassette without breakages or other problems.

The film according to comparative example 1 has very good "spring back" effect. In general, its performance in this test was equal to the examples as per the invention.

### ODOR TESTING

30 soiled nappies were packed in a tube made of each ones of films according to examples 1 and 2 and comparative example - 10 nappies per each film. Then they were put each one in a hermetically closed glass jar.

After 24 h, a panel of 7 people evaluated each sample, and rated the film with best odor barrier properties with a score of 3, the second-best with a score of 2, and the third-best with a score of 1.

The films received the following total score:

| | |
|---|---|
| Example 1 | 16 |
| Example 2 | 13 |
| Comparative Example | 13 |

## Claims

1. A multilayer film for malodorous item packaging, where the film comprises
a layer comprising a blend of polybutylene adipate terephthalate (PBAT) and polylactic acid (PLA) and
a barrier layer comprising an oxygen barrier material,
wherein the film comprises at least 95% biodegradable material,
wherein the film has a thickness from 10 to 50 microns, and
wherein the barrier layer comprises amorphous PVA polymer,
wherein the film comprises an inner layer and an outer layer each of them comprising the blend of polybutylene adipate terephthalate (PBAT) and polylactic acid (PLA).

2. The multilayer film according to claim 1, comprising the following layer structure:
OUTER LAYER / INTERMEDIATE LAYER / BARRIER LAYER / INTERMEDIATE LAYER / INNER LAYER

3. The multilayer film according to one of the preceding claims, comprising the following layer structure:
OUTERLAYER / ABUSE LAYER / INTERMEDIATE LAYER / BARRIER LAYER / INTERMEDIATE LAYER / ABUSE LAYER / INNER LAYER

4. The multilayer film according to one of the preceding claims, wherein the film has a weight of between 15g/m² and 45 g/m².

5. The multilayer film according to one of the preceding claims, wherein the PLA content in a layer comprising a blend of polybutylene adipate terephthalate (PBAT) and polylactic acid (PLA) is less than 50% per weight.

6. Use of the film according to one of the preceding claims for packaging malodourous items.

7. Method for producing a film according to one of claims 1 to 5, wherein the method is a hot blown film method or the film is produced by extrusion through a flat cast die.

## Patentansprüche

1. Mehrschichtfolie zum Verpacken geruchsintensiver Gegenstände, wobei die Folie
eine Schicht umfassend eine Mischung aus Polybutylenadipat-terephthalat (PBAT) und Polymilchsäure (PLA) und
eine Barriereschicht umfassend ein Sauerstoffbarrierematerial umfasst,
wobei die Folie mindestens 95 % biologisch abbaubares Material umfasst,
wobei die Folie eine Dicke von 10 bis 50 µm aufweist,
wobei die Barriereschicht amorphes PVA-Polymer umfasst, und
wobei die Folie eine Innenschicht und eine Außenschicht umfasst, die jeweils die Mischung aus Polybutylenadipat-terephthalat (PBAT) und Polymilchsäure (PLA) umfassen.

2. Mehrschichtfolie nach Anspruch 1, umfassend die folgende Schichtstruktur:
AUSSENSCHICHT / ZWISCHENSCHICHT / BARRIERESCHICHT / ZWISCHENSCHICHT / INNENSCHICHT

3. Mehrschichtfolie nach einem der vorhergehenden Ansprüche, umfassend die folgende Schichtstruktur:
AUSSENSCHICHT / SCHUTZSCHICHT / ZWISCHENSCHICHT / BARRIERESCHICHT / ZWISCHENSCHICHT / SCHUTZSCHICHT / INNENSCHICHT

4. Mehrschichtfolie nach einem der vorhergehenden Ansprüche, wobei die Folie ein Flächengewicht zwischen 15 g/m² und 45 g/m² aufweist.

5. Mehrschichtfolie nach einem der vorhergehenden Ansprüche, wobei der PLA-Gehalt in einer Schicht, die eine Mischung aus Polybutylenadipat-terephthalat (PBAT) und Polymilchsäure (PLA) umfasst, weniger als 50 Gew.-% beträgt.

6. Verwendung der Folie nach einem der vorhergehenden Ansprüche zum Verpacken geruchsintensiver Gegenstände.

7. Verfahren zur Herstellung einer Folie nach einem der Ansprüche 1 bis 5, wobei das Verfahren ein Heißblasfolienverfahren ist oder die Folie durch Extrusion durch eine Flachfoliendüse hergestellt wird.

## Revendications

1. Film multicouche destiné à l'emballage d'articles malodorants, le film comprenant une couche comprenant un mélange de poly(butylène adipate-co-téréphtalate) (PBAT) et d'acide polylactique (PLA), et
une couche barrière comprenant un matériau barrière à l'oxygène,
dans lequel le film comprend au moins 95 % de matériau biodégradable,
dans lequel le film présente une épaisseur de 10 à 50 µm,
dans lequel la couche barrière comprend un polymère de PVA amorphe, et
dans lequel le film comprend une couche interne et une couche externe comprenant chacune le mélange de poly(butylène adipate-co-téréphtalate) (PBAT) et d'acide polylactique (PLA).

2. Film multicouche selon la revendication 1, comprenant la structure de couches suivante :
COUCHE EXTERNE / COUCHE INTERMÉDIAIRE / COUCHE BARRIÈRE / COUCHE INTERMÉDIAIRE / COUCHE INTERNE

3. Film multicouche selon l'une quelconque des revendications précédentes, comprenant la structure de couches suivante :
COUCHE EXTERNE / COUCHE DE PROTECTION / COUCHE INTERMÉDIAIRE / COUCHE BARRIÈRE / COUCHE INTERMÉDIAIRE / COUCHE DE PROTECTION / COUCHE INTERNE

4. Film multicouche selon l'une quelconque des revendications précédentes, dans lequel le film présente un grammage compris entre 15 g/m² et 45 g/m².

5. Film multicouche selon l'une quelconque des revendications précédentes, dans lequel la teneur en PLA dans une couche comprenant un mélange de poly(butylène adipate-co-téréphtalate) (PBAT) et d'acide polylactique (PLA) est inférieure à 50 % en poids.

6. Utilisation du film selon l'une quelconque des revendications précédentes pour l'emballage d'articles malodorants.

7. Procédé de fabrication d'un film selon l'une quelconque des revendications 1 à 5, dans lequel le procédé est un procédé de fabrication de film soufflé à chaud ou le film est produit par extrusion au travers d'une filière plate.
